# EUROPÄISCHE PATENTSCHRIFT

(11) **EP 4 265 909 B1**
(45) Veröffentlichungstag und Bekanntmachung des Hinweises auf die Patenterteilung: **02.04.2025**
(21) Anmeldenummer: 23178938.9
(22) Anmeldetag: 13.06.2023
(51) Int. Cl.: F16F 1/12, F16F 15/067, F04B 39/00, F04B 53/00

(54) **PUMPSTAND FÜR EINE VAKUUMPUMPE**
PUMPING STATION FOR A VACUUM PUMP
POSTE DE POMPAGE POUR UNE POMPE À VIDE

(43) Veröffentlichungstag der Anmeldung: 25.10.2023
(73) Patentinhaber: Pfeiffer Vacuum Technology AG, 35614 Asslar (DE)
(72) Erfinder: MEKOTA, Mirko, 35630 Ehringshausen (DE); GILBRICH, Sönke, 35753 Greifenstein (DE); HAHN, Dominik, 35083 Wetter-Oberrosphe (DE)
(74) Vertreter: Manitz Finsterwald Patent- und Rechtsanwaltspartnerschaft mbB

(56) Entgegenhaltungen:
- EP-B1- 3 298 278
- DE-A1- 102014 224 050
- DE-U1- 212020 000 257
- US-A- 3 428 279
- US-A- 3 785 167
- US-A- 4 306 708
- US-A1- 2005 169 775

## Beschreibung

Die vorliegende Erfindung betrifft einen Pumpstand für eine Vakuumpumpe, insbesondere für eine Membranvakuumpumpe.

Ein gattungsgemäßer Pumpstand geht der Art nach im Wesentlichen aus der DE 10 2014 224 050 A1 hervor.

Weitergehender Stand der Technik ergibt sich ferner aus den Druckschriften US 3 428 279 A und US 2005/169775 A1.

Ein Vakuum-Pumpstand dient zur Aufnahme mehrerer Vakuumpumpen, welche strömungstechnisch miteinander verbunden und insbesondere hintereinandergeschaltet sind, um sich so hinsichtlich der erreichbaren Druckstufen zu ergänzen. Beispielsweise kann ein Vakuum-Pumpstand eine Membranvakuumpumpe als Vorvakuumpumpe sowie eine Turbomolekularpumpe als Hochvakuumpumpe umfassen. Wird die Membranvakuumpumpe dabei an dem Pumpstand bzw. an einem Basiselement desselben zur Aufnahme der Membranvakuumpumpe starr befestigt, können unter Umständen die während des Betriebs der Membranvakuumpumpe von derselben ausgehende Schwingungen in unerwünschter Weise auf die Turbomolekularvakuumpumpe übertragen werden, was zu Funktionsstörungen derselben führen kann.

Ferner können während des Transports eines Pumpstands transportbedingte Impulse auf die beispielsweise als Membranvakuumpumpe oder als Drehschieberpumpe ausgebildete Vorvakuumpumpe übertragen werden, wenn diese starr an dem Pumpstand befestigt ist, was zu einer Beschädigung der Vorvakuumpumpe führen kann.

Der Erfindung liegt daher die Aufgabe zugrunde, bei einem Vakuum-Pumpstand dafür zu sorgen, dass von einer Vakuumpumpe, insbesondere einer Vorvakuumpumpe, ausgehende Schwingungen nicht auf den Pumpstand übertragen werden, und dass gleichermaßen auch auf die Vakuumpumpe, insbesondere auf die Vorvakuumpumpe, des Pumpstands keine externen Impulse übertragen werden können. Ferner sollte dafür gesorgt werden, dass keine zusätzlichen Transportsicherungen für die Vakuumpumpe benötigt werden, die andernfalls bei der Inbetriebnahme des Pumpstands eigens gelöst werden müssen.

Diese Aufgabe wird mit einem Pumpstand mit den Merkmalen des Anspruchs 1 und insbesondere dadurch gelöst, dass der Pumpstand über zumindest eine Lageranordnung verfügt, über die sich eine schwingungstechnische Entkopplung einer Vakuumpumpe von dem Pumpstand erzielen lässt.

Die Lageranordnung verfügt dabei über ein Trägerelement zur Abstützung einer Vakuumpumpe, wobei es sich bei dem Trägerelement um ein oder mehrere Biegebalken zur Abstützung einer Vakuumpumpe handelt. Des Weiteren verfügt die Lageranordnung über zumindest ein Federelement in Form beispielsweise einer Schraubendruckfeder, über das bzw. die das Trägerelement an dem Basiselement des Pumpstands elastisch federnd abgestützt ist, wozu sich das Federelement zwischen einander zugewandten Seiten des Trägerelements und des Basiselements erstreckt. Handelt es sich bei dem Trägerelement beispielsweise um eine rechteckige Trägerplatte, so kann diese an ihren vier Ecken über dort befindliche Federelemente elastisch federnd an dem Basiselement des Pumpstands abgestützt sein.

Um das Trägerelement an dem Basiselement verliersicher halten und gegen abhebende Kräfte während des Transports des Pumpstands sichern zu können, verfügt die Lageranordnung des Weiteren über zumindest ein Befestigungselement beispielsweise in Form einer Schraube mit einem Schaft, das sich durch das Federelement hindurch erstreckt und mittels dessen das Trägerelement mit dem Basiselement verspannt ist, wobei es insbesondere vorgesehen sein kann, dass das Trägerelement mittels des Befestigungselements entgegen der Vorspannwirkung des Federelements mit dem Basiselement verspannt ist.

Das Trägerelement umfasst zumindest einen Biegebalken, der an seinen Enden jeweils über ein Federelement an dem Basiselement abgestützt und mittels eines Befestigungselements, dessen Schaft sich durch eine Distanzhülse erstreckt, mit dem Basiselement verspannt ist. Der Biegebalken ist somit an seinen beiden Enden mit einer Lageranordnung, wie sie zuvor beschrieben wurde, gelagert, so dass der Biegebalken im statischen Sinne einen Einfeldträger bildet.

Da das zumindest eine Federelement im unbelasteten Zustand der Lageranordnung keine Vorspannwirkung auf das Trägerelement aufbringen bzw. kräftefrei sein sollte und damit ferner alle Befestigungselemente, über die das Trägerelement mit dem Basiselement des Pumpstands abgestützt ist, gleich stark angezogen werden können, umfasst die Lageranordnung darüber hinaus eine Distanzhülse, die von dem Federelement umgeben ist und die ihrerseits den Schaft des Befestigungselements über eine Längenerstreckung hinweg umgibt, die infolge der Verspannung des Trägerelements mit dem Basiselement eine Dehnung erfährt.

Der Schaft des Befestigungselements, die Distanzhülse und das Federelement sind somit also im Wesentlichen konzentrisch zueinander angeordnet, wobei die Distanzhülse eine Längenerstreckung aufweist, die der Klemmlänge des Befestigungselements und somit der Länge des Schafts entspricht, die infolge der Verspannung des Trägerelements mit dem Basiselement gedehnt wird. Anders ausgedrückt entspricht die Länge der Distanzhülse jenem Abschnitt des Schafts, der infolge der Verspannung des Trägerelements mit dem Basiselement gedehnt wird. Hierzu ist die axiale Länge der Distanzhülse so groß zu wählen, dass der Schaft des Befestigungselements bereits im unbelasteten Zustand der Lageranordnung unter Zug steht. Gleichermaßen sollte die axiale Länge der Distanzhülse derart auf die axiale Erstreckung des Federelements abgestimmt sein, dass dieses im unbelasteten Zustand der Lageranordnung d.h. ohne einer auf dem Trägerelement befindlichen Vakuumpumpe kräftefrei ist bzw. keine Vorspannwirkung entfaltet.

Durch die Distanzhülse wird somit der gegenseitige Abstand zwischen dem Trägerelement und dem Basiselement im unbelasteten Zustand der Lageranordnung vorgegeben, womit gleichermaßen sichergestellt wird, dass das Federelement im unbelasteten Zustand der Lageranordnung keine Vorspannwirkung entfaltet. Anders ausgedrückt kann also das Befestigungselement nur so weit angezogen werden, bis sich ein vorgegebener Abstand zwischen dem Trägerelement und dem Basiselement einstellt.

Im Folgenden wird nun auf bevorzugte Ausführungsformen der Erfindung eingegangen. Weitere Ausführungsformen können sich auch aus den abhängigen Ansprüchen, der Figurenbeschreibung sowie den Zeichnungen selbst ergeben.

So kann es gemäß einer Ausführungsform vorgesehen sein, dass an dem Trägerelement und/oder an dem Basiselement zumindest eine Führung für das Federelement ausgebildet ist, durch die sichergestellt werden kann, dass das Federelement während des Betriebs der Pumpe rein axial komprimiert wird. Durch die Führung können somit etwaige Querauslenkungen des Federelements verhindert werden. Gleichermaßen dient eine derartige Führung als Lagesicherung für das Federelement, damit dieses seine konzentrische Lage bezüglich des Befestigungselements und der den Schaft des Befestigungselements umgebenden Distanzhülse beibehält. Hierdurch kann verhindert werden, dass das Federelement mit der Distanzhülse in Kontakt gelangt, was ansonsten während des Betriebs einer Vakuumpumpe zu unerwünschten Klappergeräuschen führen kann.

Gemäß einer Ausführungsform kann es sich bei der in Rede stehenden Führung beispielsweise um einen an dem Basiselement und/oder an dem Trägerelement ausgebildeten Dom handeln, den das Federelement umgibt und mit dem ein jeweiliges Ende der Distanzhülse in Kontakt steht. Insbesondere kann es dabei vorgesehen sein, dass ein Ende des Schafts des Befestigungselements in den Dom eingeschraubt ist, wozu in diesem ein Hohlraum mit einem entsprechenden Innengewinde ausgebildet sein kann.

Dadurch, dass das Federelement den Dom umgibt, wird dessen radiale Ausrichtung gegenüber der auf dem Dom aufstehenden Distanzhülse fixiert, so dass das Federelement die Distanzhülse in der gewünschten Weise nicht berührt, was andernfalls unerwünschte Klappergeräusche verursachen kann.

Zusätzlich oder alternativ zu der zuvor beschriebenen Ausführungsform kann es sich bei der Führung auch um eine in dem Basiselement und/oder in dem Trägerelement ausgebildete Senkung in Form einer Sacklochbohrung handeln, die das jeweilige Ende des Federelements aufnimmt. Auch hierdurch kann eine etwaige Fehlausrichtung des Federelements gegenüber der Distanzhülse verhindert werden, um so unerwünschte Klappergeräusche zu verhindern, die andernfalls entstehen könnten, wenn das Federelement mit der Distanzhülse in Anlage gelangt.

Gemäß noch einer weiteren Ausführungsform kann es vorgesehen sein, dass zur Führung der Distanzhülse an dem Basiselement ein Dom ausgebildet ist, den das Federelement umgibt und auf dem ein Ende der Distanzhülse aufsteht, wohingegen in dem Trägerelement eine entsprechende Senkung ausgebildet ist, die das andere Ende des Federelements aufnimmt. Alternativ hierzu kann jedoch auch der Dom an dem Trägerelement und die Senkung in dem Basiselement ausgebildet sein.

Gemäß einer weiteren Ausführungsform kann es vorgesehen sein, dass die Distanzhülse aus einem Kunststoffmaterial gefertigt ist, da hierdurch selbst dann, wenn es bei nicht streng axial verlaufenden Schwingungen zum Kontakt zwischen Federelement und Distanzstück kommen sollte, sichergestellt werden kann, dass hierdurch keine unerwünschten Klappergeräusche hervorgerufen werden. Gleichermaßen können durch die Ausbildung der Distanzhülse aus einem Kunststoffmaterial unerwünschte Klappergeräusche infolge eines Kontakts zwischen der Distanzhülse und dem Schaft des Befestigungselements sowie dem Trägerelement verhindert werden. Die Ausgestaltung der Distanzhülse aus einem Kunststoffmaterial kann sich insbesondere dann als vorteilhaft erweisen, wenn keine Führungen für das Federelement vorgesehen sind, da in diesem Falle selbst dann unerwünschte Klappergeräusche verhindert werden können, wenn es zu einem Kontakt zwischen dem Federelement und der Distanzhülse kommen sollte.

Vorzugsweise umfasst das Trägerelement zwei Biegebalken, welche im Wesentlichen parallel zueinander verlaufen. In diesem Falle kann auf den beiden Biegebalken eine Vakuumpumpe befestigt sein, die den Abstand zwischen den beiden Biegebalken überbrückt. Die beiden Biegebalken sind somit weitestgehend schwingungstechnisch voneinander entkoppelt, so dass eine Auslenkung des einen Biegebalkens keinen Einfluss auf die Auslenkung des anderen Biegebalkens hat und umgekehrt.

Damit selbst sehr große Auslenkungen des Federelements nicht auf den Pumpstand übertragen werden, kann es gemäß einer bevorzugten Ausführungsform vorgesehen sein, dass das jeweilige Federelement einer jeden Lageranordnung eine Federkonstante aufweist, die so groß gewählt ist, dass das Federelement selbst während des Betriebs der Vakuumpumpe nicht auf Block geht.

Um nicht nur für eine schwingungstechnische Entkopplung zwischen Vakuumpumpe und Pumpstand in vertikaler Richtung, sondern auch in horizontaler Richtung zu sorgen, kann es gemäß einer weiteren Ausführungsform ferner vorgesehen sein, dass der Pumpstand zumindest zwei Lageranordnungen umfasst, deren Federelemente, Distanzhülsen und Befestigungselemente senkrecht zueinander orientiert sind.

Im Folgenden wird die Erfindung nun rein exemplarisch und unter Bezugnahme auf die Zeichnungen beschrieben, in denen:
- Fig. 1: einen Abschnitt eines erfindungsgemäßen Pumpstands in einer Ansicht zeigt;
- Fig. 2: eine erste Ausführungsform einer erfindungsgemäßen Lageranordnung zeigt;
- Fig. 3: eine zweite Ausführungsform einer erfindungsgemäßen Lageranordnung zeigt;
- Fig. 4: eine dritte Ausführungsform einer erfindungsgemäßen Lageranordnung zeigt;
- Fig. 5: eine vierte Ausführungsform einer erfindungsgemäßen Lageranordnung zeigt; und
- Fig. 6: eine Ausführungsform mit zwei senkrecht zueinander orientierten Lageranordnungen zeigt.

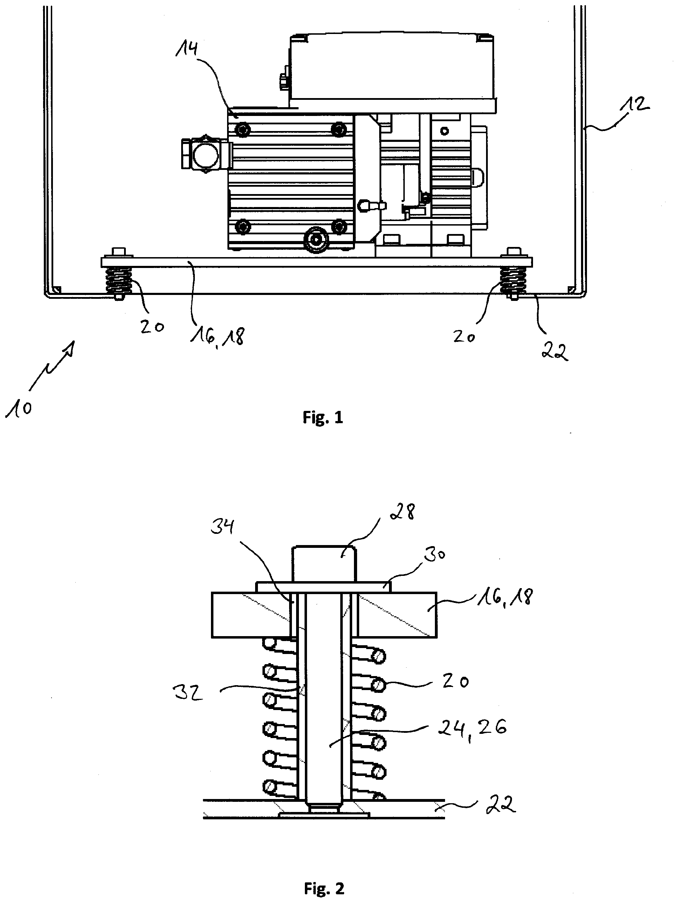

Die Fig. 1 zeigt einen Abschnitt eines erfindungsgemäßen Pumpstands 10 in der Ansicht. Insbesondere zeigt die Fig. 1 einen Teil eines Gehäuses 12 des Pumpstands 10, in dem eine Vorvakuumpumpe 14 in Form einer Membranvakuumpumpe untergebracht ist. Nicht dargestellt ist eine durch den Pumpstand 10 und insbesondere dessen Gehäuse 12 gestützte Hochvakuumpumpe in Form beispielsweise einer Turbomolekularvakuumpumpe, die der Vorvakuumpumpe 14 in Strömungsrichtung vorgeschaltet ist.

Wie der Fig. 1 entnommen werden kann, befindet sich die Vorvakuumpumpe 14 auf einem Trägerelement 16, bei dem es sich beispielsweise um eine Trägerplatte handeln kann, auf der die Vorvakuumpumpe 14 aufsteht. Alternativ hierzu kann das Trägerelement 16 zwei senkrecht zur Zeichenebene beabstandete und parallel zueinander verlaufende Biegebalken 18 umfassen, auf denen die Vorvakuumpumpe 14 derart befestigt ist, dass sie den Abstand zwischen den beiden Biegebalken 18 überbrückt.

Wie bereits der Fig. 1 entnommen werden kann, ist der jeweilige Biegebalken 18 an seinen beiden Enden mittels jeweils eines Federelements 20 an einem Basiselement 22 des Gehäuses 12 elastisch abgestützt, wodurch verhindert werden kann, dass betriebsbedingte Schwingungen der Vorvakuumpumpe 14 auf das Gehäuse 12 und von dort auf eine daran gelagerte Turbomolekularvakuumpumpe (nicht dargestellt) übertragen werden können.

Wie der vergrößerten Darstellung der Fig. 2 entnommen werden, ist das Trägerelement 16 bzw. der Biegebalken 18 an dem Basiselement 22 über ein Federelement 20 in Form einer Schraubendruckfeder 20 abgestützt, wozu sich das Federelement 20 zwischen den beiden einander zugewandten Flächen des Trägerelements 16 und des Basiselements 22 erstrecken. Um das Trägerelement 16 bzw. den Biegebalken 18 während des Transports des Pumpenstands 10 gegen abhebende Kräfte sichern zu können, ist das Trägerelement 16 mittels eines Befestigungselements 24 in Form einer Bolzenschraube 24 mit dem Basiselement 22 verspannt, wobei sich der Schaft 26 der Bolzenschraube 24 durch die Schraubendruckfeder 20 hindurcherstreckt. Zur Verspannung des Trägerelements 16 mit dem Basiselement 22 kann das freie Ende des Schafts 26 der Bolzenschraube 24 entweder in ein in dem Basiselement 22 ausgebildetes Innengewinde oder in eine Mutter eingeschraubt werden, welche sich unterhalb des Basiselements 22 in Anlage mit demselben befindet. Der Schraubenkopf 28 liegt bei der dargestellten Ausführungsform hingegen über eine Unterlegscheibe 30 auf der Oberseite des Trägerelements 16 an, so dass dasselbe gegen abhebende Kräfte an dem Basiselement 22 gesichert ist. Die Unterlegscheibe 30 wird jedoch nicht zwangsweise benötigt, wenn die Bohrung 34 des Trägerelements 16 so klein ist, dass der Schraubenkopf 28 nicht hindurchpasst, oder wenn eine Flanschkopfschraube verwendet wird. Durch das Befestigungselement 24 wird somit eine Transportsicherung geschaffen, durch die verhindert werden kann, dass das Trägerelement 16 während des Transports des Pumpstands 10 von dem Federelement 20 herunterspringen kann. Es wird somit keine separate Transportsicherung benötigt, mit der das Trägerelement 16 für den Transport mit dem Basiselement 22 soweit verspannt werden kann, bis das Federelement 20 auf Block geht. Bei einer derartigen separaten Transportsicherung kann es vorkommen, dass nach dem Transport vergessen wird, die Transportsicherung zu lösen, was während des Betriebs zu einer unerwünschten Schwingungsübertragung auf die Hochvakuumpumpe führen kann. Da das Befestigungselement 24 der erfindungsgemäßen Lageranordnung nach dem Transport des Pumpstands 10 nicht entfernt werden braucht, wird somit eine Transportsicherung geschaffen, die für Anwendungsfehler unanfällig ist.

Da die von dem Federelement 20 ausgehende Vorspannung umso größer ist, je näher das Trägerelement 16 mittels des Befestigungselements 24 an das Basiselement 22 gezogen wird, ist der Schaft 26 des Befestigungselements 24 von einer Distanzhülse 32 umgeben, die vorzugsweise aus einem Kunststoffmaterial gefertigt sein kann. Konkret erstreckt sich dabei die Distanzhülse 32 zwischen der Unterseite der Unterlegscheibe 30 und der dem Trägerelement 16 zugewandten Seite des Basiselements 22. Insbesondere erstreckt sich die Distanzhülse 32 durch die in dem Trägerelement 16 ausgebildete Öffnung 34, durch die sich auch der Schaft 26 des Befestigungselements 24 erstreckt. Durch die axiale Erstreckung der Distanzhülse 32 wird somit der maximale Abstand zwischen dem Trägerelement 16 und dem Basiselement 22 vorgegeben, wodurch sichergestellt werden kann, dass das Befestigungselement 24 nur genau so weit angezogen werden kann, dass das Federelement 20 eine Vorspannkraft vorbestimmter Größe entfaltet.

Da sich die Distanzhülse 32 zwischen der Unterseite der Unterlegscheibe 30 und der dem Trägerelement 16 zugewandten Seite des Basiselements 22 erstreckt, ist durch die axiale Längenerstreckung der Distanzhülse 32 somit die unter Spannung gedehnte Länge des Schraubenschafts 26 vorgegeben. Diese unter Spannung gedehnte Länge eines Schraubenschafts wird üblicherweise als Klemmlänge bezeichnet, worunter in der technischen Mechanik die Dicke der zu verbindenden Bauteile einschließlich gegebenenfalls vorhandener Unterlegscheiben bezeichnet wird.

Die axiale Länge der Distanzhülse 32 sollte dabei so groß gewählt sein, dass im unbelasteten Zustand der Lageranordnung, in dem also noch keine Pumpe auf dem Trägerelement 16 ruht, das Federelement 20 keine Vorspannwirkung entfaltet und somit der Schaft 26 des Befestigungselements 24 ausschließlich durch das Anzugsmoment des Befestigungselements 24 unter Zug steht. Die Federkonstante des Federelements 20 sollte hingegen so groß gewählt sein, dass das Federelement 20 selbst während des Betriebs einer auf dem Trägerelement 16 montierten Vorvakuumpumpe nicht auf Block geht.

Wie bereits zuvor erwähnt, bietet es sich an, die Distanzhülse 32 aus einem Kunststoffmaterial zu fertigen, da hierdurch sichergestellt werden kann, dass es bei einem Kontakt zwischen dem Federelement 20 und der Distanzhülse 32 zu keinen störenden Klappergeräuschen kommt.

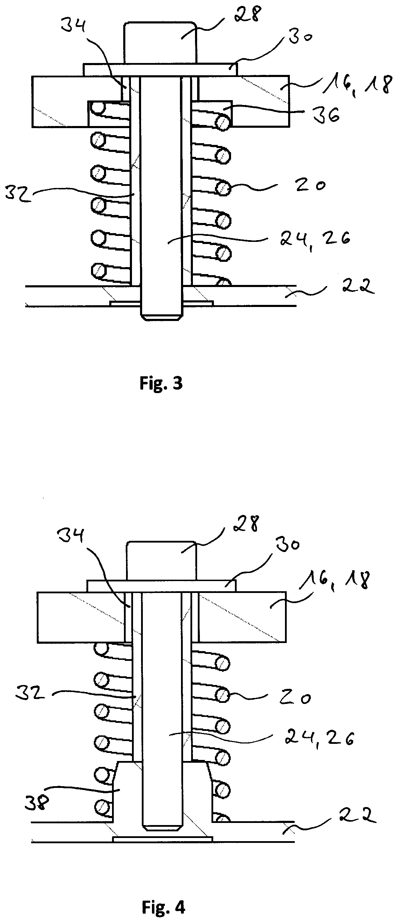

Um jedoch einen derartigen Kontakt zwischen Federelement 20 und Distanzhülse 32 von vornherein ausschließen zu können, ist es bei der in der Fig. 3 dargestellten Ausführungsform vorgesehen, dass in der dem Basiselement 22 zugewandten Seite des Trägerelements 16 eine hohlzylindrische Senkung 36 ausgebildet ist, die das entsprechende Ende des Federelements 20 aufnimmt und die koaxial mit der Öffnung 34 in dem Trägerelement 16 ausgerichtet ist. Das Federelement 20 wird somit in der Senkung 36 in radialer Richtung gehalten, wodurch die koaxiale Anordnung von Federelement 20, Distanzhülse 32 und Befestigungselement 24 dauerhaft erhalten bleibt.

Alternativ zu der in der Fig. 3 dargestellten Ausführungsform ist es bei der in der Fig. 4 dargestellten Ausführungsform vorgesehen, dass an der dem Trägerelement 16 zugewandten Seite des Basiselements 22 ein Dom 38 in Form einer hohlzylindrischen Erhebung ausgebildet ist, wobei die Schraubendruckfeder 20 den Dom 38 umgibt, so dass die Schraubendruckfeder 20 in radialer Richtung an Ort und Stelle gehalten wird. Darüber hinaus steht bei der in der Fig. 4 dargestellten Ausführungsform das untere Ende der Distanzhülse 32, die auch hier aus einem Kunststoffmaterial besteht, auf dem Dom 38 auf, was bedeutet, dass die Länge des Schafts 26 des Befestigungselements 24, die infolge der Verspannung des Trägerelements 20 mit dem Basiselement 22 eine Dehnung erfährt, und die axiale Höhenerstreckung des Doms 38 geringer ist als bei der Ausführungsform der Fig. 2.

Zwar ist bei der Ausführungsform der Fig. 4 der Dom 38 mit einem Innengewinde (nicht dargestellt) versehen, in das das freie Ende des Schafts 26 eingeschraubt ist; alternativ hierzu kann jedoch der Dom 38 auch lediglich eine Durchgangsöffnung definieren, durch die sich der Schaft 26 hindurcherstreckt, wobei unterhalb des Basiselements 22 oder oberhalb des Trägerelements 16 eine an dem Basiselement 22 bzw. an dem Trägerelement 16 anliegende Mutter vorgesehen sein kann, in die das freie Ende des Schafts 26 eingeschraubt ist.

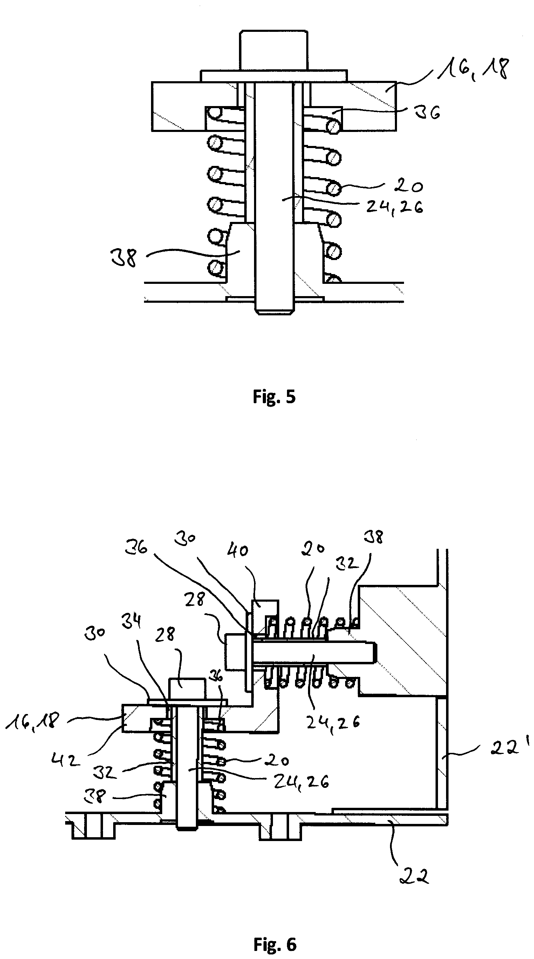

Bei der Ausführungsform der Fig. 5 handelt es sich gewissermaßen um eine Kombination der Ausführungsformen der Fig. 3 und 4, da gemäß der Ausführungsform der Fig. 5 an dem Basiselement 22 ein Dom 38 und in dem Trägerelement 16 eine Senkung 36 zur Sicherung des jeweiligen Federendes ausgebildet ist.

Mittels der zuvor beschriebenen Lageranordnungen kann somit für eine schwingungstechnische Entkopplung zwischen einer Vakuumpumpe 14 und einem Pumpenstand 10 in vertikaler Richtung gesorgt werden. Um jedoch auch horizontale Pumpenschwingungen unterdrücken oder zumindest dämpfen zu können, kann es gemäß der in der Fig. 6 dargestellten Ausführungsform vorgesehen sein, dass es sich bei dem Trägerelement 16 um einen Biegebalken 18 mit winkelförmigem Querschnitt handelt, wobei der vertikale Winkelschenkel 40 in entsprechender Weise wie der horizontale Winkelschenkel für eine Lageranordnung aus Federelement 20, Distanzhülse 32 und Befestigungselement 24 an einem vertikalen Basiselementabschnitt 22' gesichert ist.

### Bezugszeichenliste

- 10: Pumpstand
- 12: Gehäuse
- 14: Vorvakuumpumpe
- 16: Trägerelement
- 18: Biegebalken
- 20: Federelement
- 22: Basiselement
- 22': Basiselementabschnitt
- 24: Befestigungselement/Bolzenschraube
- 26: Schaft
- 28: Schraubenkopf
- 30: Unterlegscheibe
- 32: Distanzhülse
- 34: Öffnung
- 36: Senkung
- 38: Dom
- 40: vertikaler Winkelschenkel
- 42: horizontaler Winkelschenkel

## Patentansprüche

1. Pumpstand (10) für eine Vakuumpumpe (14), insbesondere für eine Vorvakuumpumpe, wobei der Pumpstand (10) ein Basiselement (22) umfasst, an dem eine Lageranordnung zur schwingungstechnischen Entkopplung einer Vakuumpumpe (14), insbesondere einer Vorvakuumpumpe, von dem Pumpstand (10) vorgesehen ist, wobei die Lageranordnung umfasst:
- ein Trägerelement (16) zur zumindest mittelbaren Abstützung einer Vakuumpumpe (14);
- zumindest ein Federelement (20), über das das Trägerelement (16) an dem Basiselement (22) abgestützt ist, wozu sich das Federelement (20) zwischen einander zugewandten Seiten des Trägerelements (16) und des Basiselements (22) erstreckt;
- ein Befestigungselement (24) mit einem Schaft (26), insbesondere in Form einer Schraube, mittels dessen das Trägerelement (16) mit dem Basiselement (22) verspannt ist; und
- eine Distanzhülse (32), die von dem Federelement (20) umgeben ist und die ihrerseits den Schaft (26) des Befestigungselements (24) über eine Längenerstreckung umgibt, die infolge der Verspannung des Trägerelements (16) mit dem Basiselement (22) eine Dehnung erfährt;
**dadurch gekennzeichnet, dass**
das Trägerelement (16) zumindest einen Biegebalken (18) umfasst, der an seinen Enden jeweils über ein Federelement (20) an dem Basiselement (22) abgestützt und mittels eines Befestigungselements (24), dessen Schaft (26) sich durch eine Distanzhülse (32) erstreckt, mit dem Basiselement (22) verspannt ist.

2. Pumpstand (10) nach Anspruch 1,
wobei die axiale Länge der Distanzhülse (32) so gewählt ist, dass in einem unbelasteten Zustand der Lageranordnung der Schaft (26) des Befestigungselements (24) ausschließlich infolge des Anzugsmoments des Befestigungselements (24) unter Zug steht.

3. Pumpstand (10) nach Anspruch 1 oder 2,
wobei das Federelement (20) im unbelasteten Zustand der Lageranordnung nur durch das Trägerelement (16) belastet ist.

4. Pumpstand (10) nach einem der vorstehenden Ansprüche,
wobei das Federelement (20) eine Schraubendruckfeder (20) ist.

5. Pumpstand (10) nach einem der vorstehenden Ansprüche,
wobei an dem Trägerelement (16) und/oder an dem Basiselement (22) zumindest eine Führung für das Federelement (20) ausgebildet ist.

6. Pumpstand (10) nach Anspruch 5,
wobei es sich bei der Führung um einen an dem Basiselement (22) und/oder an dem Trägerelement (16) ausgebildeten Dom (38) handelt, den das Federelement (20) umgibt und auf dem ein Ende der Distanzhülse (32) aufsteht,
wobei es insbesondere vorgesehen ist, dass der Schaft (26) des Befestigungselements (24) in den Dom (38) eingeschraubt ist.

7. Pumpstand (10) nach Anspruch 5,
wobei es sich bei der Führung um eine in dem Basiselement (22) und/oder in dem Trägerelement (16) ausgebildete Senkung (36) handelt, die das jeweilige Ende des Federelements (20) aufnimmt.

8. Pumpstand (10) nach einem der vorstehenden Ansprüche,
wobei die Distanzhülse (32) aus einem Kunststoffmaterial gefertigt ist.

9. Pumpstand (10) nach Anspruch 1,
wobei das Trägerelement (16) zwei parallel zueinander verlaufende Biegebalken (18) umfasst.

10. Pumpstand (10) nach Anspruch 9,
wobei auf den beiden Biegebalken (18) eine den Abstand zwischen den beiden Biegebalken (18) überbrückende Vakuumpumpe (14) befestigt ist, insbesondere eine Membranvakuumpumpe (14) oder eine Drehschieberpumpe.

11. Pumpstand (10) nach einem der vorstehenden Ansprüche,
wobei das Federelement (20) eine Federkonstante aufweist, die so gewählt ist, dass das Federelement (20) während des Betriebs der Vakuumpumpe (14) nicht auf Block geht.

12. Pumpstand (10) nach einem der vorstehenden Ansprüche,
wobei der Pumpstand (10) zumindest zwei Lageranordnungen umfasst, deren Federnelemente, Distanzhülsen (32) und Befestigungselemente (24) senkrecht zueinander orientiert sind.

## Claims

1. A pumping station (10) for a vacuum pump (14), in particular for a backing pump, wherein the pumping station (10) comprises a base element (22) at which a support arrangement is provided for decoupling a vacuum pump (14), in particular a backing pump, from the pumping station (10) in terms of vibration, wherein the support arrangement comprises:
- a carrier element (16) for at least indirectly supporting a vacuum pump (14);
- at least one spring element (20) via which the carrier element (16) is supported at the base element (22), for which purpose the spring element (20) extends between mutually facing sides of the carrier element (16) and the base element (22);
- a fastening element (24) comprising a shank (26), in particular in the form of a screw, by means of which fastening element (24) the carrier element (16) is braced with the base element (22); and
- a spacer sleeve (32) which is surrounded by the spring element (20) and which in turn surrounds the shank (26) of the fastening element (24) over a longitudinal extent which undergoes a stretching as a result of the bracing of the carrier element (16) with the base element (22),
**characterized in that**
the carrier element (16) comprises at least one bending beam (18) which is supported at its ends, in each case via a spring element (20), at the base element (22) and which is braced with the base element (22) by means of a fastening element (24) whose shank (26) extends through a spacer sleeve (32).

2. A pumping station (10) according to claim 1,
wherein the axial length of the spacer sleeve (32) is selected such that, in an unloaded state of the support arrangement, the shank (26) of the fastening element (24) is tensioned solely as a result of the tightening torque of the fastening element (24).

3. A pumping station (10) according to claim 1 or 2,
wherein the spring element (20) is only loaded by the carrier element (16) in the unloaded state of the support arrangement.

4. A pumping station (10) according to any one of the preceding claims, wherein the spring element (20) is a helical compression spring (20).

5. A pumping station (10) according to any one of the preceding claims, wherein at least one guide for the spring element (20) is formed at the carrier element (16) and/or at the base element (22).

6. A pumping station (10) according to claim 5,
wherein the guide is a dome (38) which is formed at the base element (22) and/or at the carrier element (16), which surrounds the spring element (20) and on which one end of the spacer sleeve (32) stands,
wherein it is in particular provided that the shank (26) of the fastening element (24) is screwed into the dome (38).

7. A pumping station (10) according to claim 5,
wherein the guide is a depression (36) which is formed in the base element (22) and/or in the carrier element (16) and which receives the respective end of the spring element (20).

8. A pumping station (10) according to any one of the preceding claims, wherein the spacer sleeve (32) is made of a plastic material.

9. A pumping station (10) according to claim 1,
wherein the carrier element (16) comprises two bending beams (18) extending in parallel with one another.

10. A pumping station (10) according to claim 9,
wherein a vacuum pump (14) bridging the spacing between the two bending beams (18) is fastened to the two bending beams (18), in particular a membrane vacuum pump (14) or a rotary vane pump.

11. A pumping station (10) according to any one of the preceding claims, wherein the spring element (20) has a spring constant which is selected such that the spring element (20) does not reach its end position during the operation of the vacuum pump (14).

12. A pumping station (10) according to any one of the preceding claims, wherein the pumping station (10) comprises at least two support arrangements whose spring elements, spacer sleeves (32) and fastening elements (24) are oriented perpendicular to one another.

## Revendications

1. Poste de pompage (10) pour une pompe à vide (14), en particulier pour une pompe à vide préliminaire, le poste de pompage (10) comprenant un élément de base (22) sur lequel est prévu un ensemble de palier pour, en termes de vibrations, découpler une pompe à vide (14), en particulier une pompe à vide préliminaire, du poste de pompage (10), l'ensemble de palier comprenant :
- un élément de support (16) pour supporter au moins indirectement une pompe à vide (14) ;
- au moins un élément de ressort (20) par l'intermédiaire duquel l'élément de support (16) est supporté sur l'élément de base (22), l'élément de ressort (20) s'étendant à cet effet entre les côtés de l'élément de support (16) et de l'élément de base (22) qui se font face ;
- un élément de fixation (24) ayant une tige (26), en particulier sous la forme d'une vis, au moyen de laquelle l'élément de support (16) est serré avec l'élément de base (22) ; et
- une douille d'écartement (32) qui est entourée par l'élément de ressort (20) et qui, à son tour, entoure la tige (26) de l'élément de fixation (24) sur une extension longitudinale qui subit un allongement par suite du serrage de l'élément de support (16) avec l'élément de base (22) ;
**caractérisé en ce que**
l'élément de support (16) comprend au moins une poutre de flexion (18) qui est supportée, à ses extrémités, sur l'élément de base (22) par l'intermédiaire d'un élément de ressort respectif (20) et qui est serrée avec l'élément de base (22) au moyen d'un élément de fixation (24) dont la tige (26) traverse une douille d'écartement (32).

2. Poste de pompage (10) selon la revendication 1,
dans lequel la longueur axiale de la douille d'écartement (32) est choisie de telle sorte que, dans un état non chargé de l'ensemble de palier, la tige (26) de l'élément de fixation (24) est soumise à une traction exclusivement par suite du couple de serrage de l'élément de fixation (24).

3. Poste de pompage (10) selon la revendication 1 ou 2,
dans lequel, à l'état non chargé de l'ensemble de palier, l'élément de ressort (20) n'est sollicité que par l'élément de support (16).

4. Poste de pompage (10) selon l'une des revendications précédentes, dans lequel l'élément de ressort (20) est un ressort de compression hélicoïdal (20).

5. Poste de pompage (10) selon l'une des revendications précédentes, dans lequel au moins un guide pour l'élément de ressort (20) est formé sur l'élément de support (16) et/ou sur l'élément de base (22).

6. Poste de pompage (10) selon la revendication 5,
dans lequel le guide est un dôme (38) qui est formé sur l'élément de base (22) et/ou sur l'élément de support (16) et qui est entouré par l'élément de ressort (20) et sur lequel repose une extrémité de la douille d'écartement (32),
il est en particulier prévu que la tige (26) de l'élément de fixation (24) soit vissée dans le dôme (38).

7. Poste de pompage (10) selon la revendication 5,
dans lequel le guide est un lamage (36) qui est formé dans l'élément de base (22) et/ou dans l'élément de support (16) et qui reçoit l'extrémité respective de l'élément de ressort (20).

8. Poste de pompage (10) selon l'une des revendications précédentes, dans lequel la douille d'écartement (32) est fabriquée en matière plastique.

9. Poste de pompage (10) selon la revendication 1,
dans lequel l'élément de support (16) comprend deux poutres de flexion (18) qui s'étendent parallèlement l'une à l'autre.

10. Poste de pompage (10) selon la revendication 9,
dans lequel une pompe à vide (14), en particulier une pompe à vide à membrane (14) ou une pompe à palettes, qui couvre la distance entre les deux poutres de flexion (18) est fixée sur les deux poutres de flexion (18).

11. Poste de pompage (10) selon l'une des revendications précédentes, dans lequel l'élément de ressort (20) présente une constante de rappel qui est choisie de telle sorte que l'élément de ressort (20) ne soit pas comprimé à bloc pendant le fonctionnement de la pompe à vide (14).

12. Poste de pompage (10) selon l'une des revendications précédentes, dans lequel le poste de pompage (10) comprend au moins deux ensembles de palier dont les éléments de ressort, les douilles d'écartement (32) et les éléments de fixation (24) sont orientés perpendiculairement les uns aux autres.
